Europäisches Patentamt

European Patent Office

Office européen des brevets

(11) Publication number: **0 443 184 A2**

# EUROPEAN PATENT APPLICATION

(21) Application number: 90125095.1

(22) Date of filing: 21.12.90

(51) Int. Cl.5: **G06F 3/033**

The title of the invention has been amended (Guidelines for Examination in the EPO, A-III, 7.3).

(30) Priority: 28.12.89 JP 338408/89

(43) Date of publication of application:
28.08.91 Bulletin 91/35

(84) Designated Contracting States:
DE FR GB NL

(71) Applicant: Kabushiki Kaisha Toshiba
72, Horikawa-cho Saiwai-ku
Kawasaki-shi(JP)

(72) Inventor: Mizutani, Motoharu, c/o Intellectual
Property Div.
Kabushiki Kaisha Toshiba, 1-1 Shibaura
1-chome
Minato-ku, Tokyo 105(JP)

(74) Representative: Henkel, Feiler, Hänzel &
Partner
Möhlstrasse 37
W-8000 München 80(DE)

(54) **Data-base system for fuzzy data.**

(57) A data processing apparatus for processing input data comprising first means (11) for displaying input data as analogue data, the first displaying means including a scale for specifying the data, second means (12) for displaying a cursor in the first means, the cursor having a position corresponding to the value of the data, and a width (D) in a direction of the scale corresponding to the range of the data, means (14, 15) for moving the displayed position of the cursor in accordance with the value to be input, means (16, 17) for varying the width of the cursor in accordance with the range to be input, and means (20) for inputting the value and range as data to be processed.

F I G. 1

## DATA-BASE SYSTEM FOR AMBIGUOUS DATA

The present invention relates to an information input apparatus for inputting ambiguous information such as human sense or feeling into an information processing apparatus.

In order to input information such as a human sense or feeling, for example, a separate table for presetting numeric values in correspondence with states of feelings is used, and a numeric value corresponding to a given state of feeling is selected. The selected numeric value is input from a keyboard or the like.

More specifically, human feelings are classified into, e.g., six states from a best feeling state to a worst feeling state, and six numeric values corresponding to these six states are stored in the separate table. An operator selects one of the numeric values in accordance with a present feeling state and inputs the selected numeric value.

The conventional information input apparatus as a man-machine interface processes six pieces of discrete information corresponding to the human feelings. Since information such as a human feeling is, however, analog information, the information such as a human feeling cannot be sufficiently expressed according to the conventional input method.

It is an object of the present invention to provide an information input apparatus for processing so-called ambiguous data.

In order to achieve the above object of the present invention, there is provided an information input apparatus comprising display means (11) for displaying a data value having a data value possible range (D) together with the data value possible range (D) in a one-dimensional direction, input means (14, 15) for inputting the data value to the display means (11) and information processing means (20), and input means (16, 17) for inputting the data value possible range (D) to the data value display means (11) and the information processing means (20).

With this arrangement, human data having an ambiguous meaning, which cannot be uniquely expressed in a conventional system, can be expressed. More specifically, while the magnitude of a data value having a data value possible range (D) is monitored together with the data value possible range (D) on the display means (11), data is input to the information processing means (20) so that the data is adjusted by the input means (14, 15) for inputting this data value and the input means (16, 17) for inputting the data value possible range (D). The value and allowable width of human data having an ambiguous meaning can be specified by a microcomputer or the like, thereby processing the ambiguous data.

This invention can be more fully understood from the following detailed description when taken in conjunction with the accompanying drawings, in which:

Fig. 1 is a diagram showing an arrangement of an embodiment according to the present invention;

Fig. 2 is a plan view showing a display unit according to another embodiment of the present invention;

Fig. 3 is a view showing a data-base obtained by using an input unit according to the present invention; and

Fig. 4 is a plan view showing an input unit according to still another embodiment of the present invention.

An embodiment of the present invention will be described with reference to the accompanying drawings.

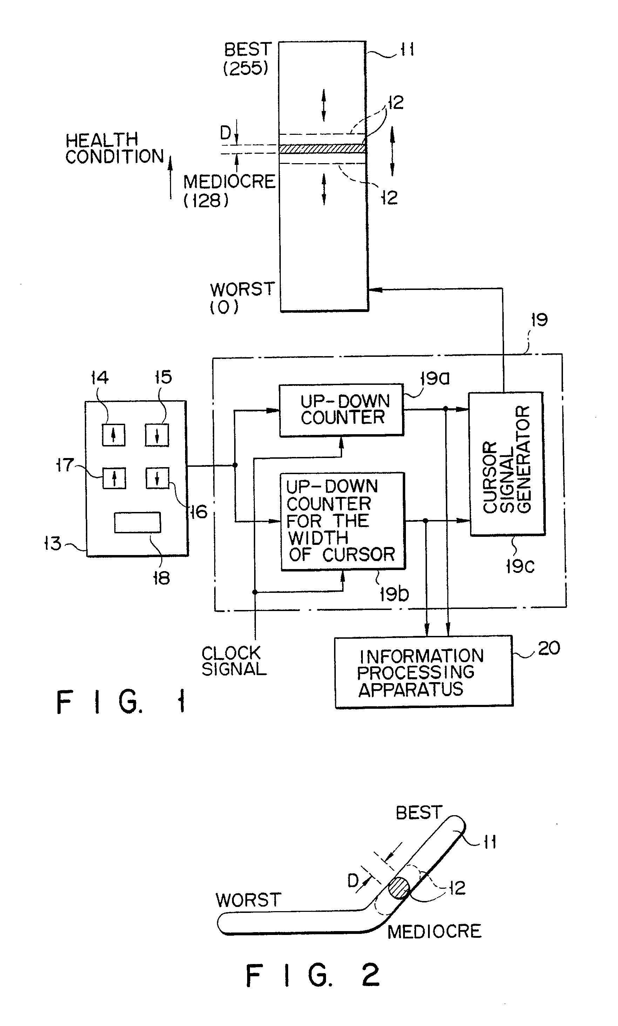

Referring to Fig. 1, a display unit 11 is a one-dimensional liquid crystal display which can input a "health condition". That is, a scale having a "worst state", a "mediocre state", and a "best state" representing criteria for the health condition longitudinally extends in the display unit 11.

A cursor 12 representing the "health condition" is displayed on the display unit 11. The cursor 12 can be moved in the longitudinal direction of the display unit 11 by operating a plurality of position keys 14 and 15 arranged in an operation panel 13.

A cursor size, i.e., a cursor width D can be changed as indicated by broken lines upon operation of size keys 16 and 17 arranged in the operation panel 13. The cursor width D can express ambiguity of input information.

The position and width of the cursor 12 are confirmed upon operation of a confirmation key 18. The cursor 12 can be moved to one of 255 positions along the longitudinal direction of the display unit 11.

The operation panel 13 is connected to the display unit 11 through a cursor controller 19. The cursor controller 19 comprises an up-down counter 19a for counting clock pulses upon operations of, e.g., the plurality of position keys 14 and 15, decoding the counted clock pulses, and generating a signal corresponding to a cursor position, an up-down counter 19b for counting clock pulses upon operations of the size keys 16 and 17, decoding the counted clock pulses, and generating a signal corresponding to a cursor width, and a cursor signal generator 19c for generating the cursor 12 in accordance with count outputs from the up-down counters 19a and 19b. Each of the up-down counters 19a and 19b has an 8-bit structure, a resolution of 0 to 255.

When the plurality of position keys 14 and 15 and the size keys 16 and 17 arranged in the operation panel 13 are operated, the up-down counters 19a and 19b count clock pulses. The cursor signal generator 19c supplies a cursor signal corresponding to the count values of the up-down counters 19a and 19b to the display unit 11. The cursor 12 is longitudinally moved on the display unit 11 in accordance with operations of the position keys 14 and 15 of the operation panel 13. The width D of the cursor 12 is changed upon operations of the size keys 16 and 17, as indicated by the broken lines in Fig. 1.

As described above, the cursor 12 is moved to a predetermined position of the "health condition" scale, and ambiguity of the corresponding information is represented by the cursor width D. When the confirmation key 18 is then operated, the position and width of the cursor 12 are confirmed. Count values of the up-down counters 19a and 19b at this position are quantized, and quantized outputs are supplied to an information processing apparatus 20. The quantized output represents one of the values of "0" to "255". Therefore, the health condition is represented by 16-bit information, i.e., position information and size information.

In the above embodiment, the cursor 12 is displayed on the display unit 11 and is operated by the position keys 14 and 15 in the operation panel 13 to move the cursor 12 to a predetermined position. At the same time, the size of the cursor 12 is designated with the size keys 16 and 17. The position information and the size information are quantized upon operation of the confirmation key 18, and the quantized data are input to the information processing apparatus 20. Therefore, analog information such as a human feeling can be more accurately input than that in a conventional arrangement.

In addition to the health condition information, since ambiguity of the information can be represented by the cursor size information, analog information can be more accurately input.

The quantized data can be expressed by about 16-bit data, and a storage capacity of a memory can be advantageously small.

In the above embodiment, the display unit 11 has a rectangular shape, but the shape of the display unit 11 is not limited to this. For example, any shape may be used, as shown in Fig. 2.

The cursor is moved upon key input operations. However, the cursor can be moved by using a mouse or the like.

The arrangement of the cursor controller 19 is not limited to the one described above.

Various changes and modifications may be made without departing from the spirit and scope of the invention.

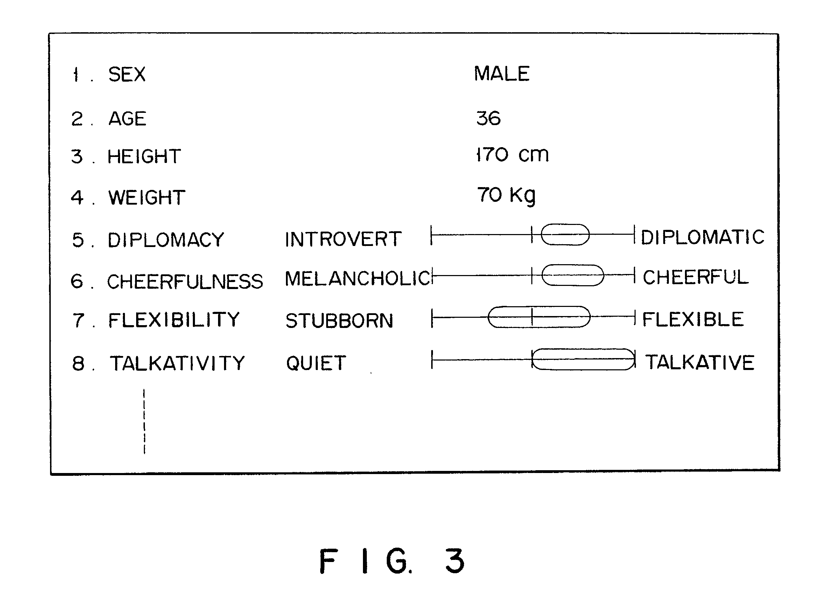

Fig. 3 shows a data format of an individual data-base obtained by utilizing the input apparatus according to the present invention. This individual data is input from the input apparatus of the present invention and is stored in the information processing apparatus 20. The stored data are read out in accordance with an application purpose. The readout data can be rearranged and processed, and displayed on the display unit or printed out at a printer. In this case, data 1. SEX, 2. AGE, 3. HEIGHT, and 4. WEIGHT an be solely determined as point data. However, analog human data such as 6. CHEERFULNESS, 7. FLEXIBILITY, and 8. TALKATIVITY cannot be uniquely determined as point data. The degrees of these data of each individual person are considered to change instantaneously. These analog data can be optimally expressed using an intermediate value of the data and its allowable width (ambiguity). For this reason, data input and processing operations having an allowable width in the input apparatus of the present invention are effective.

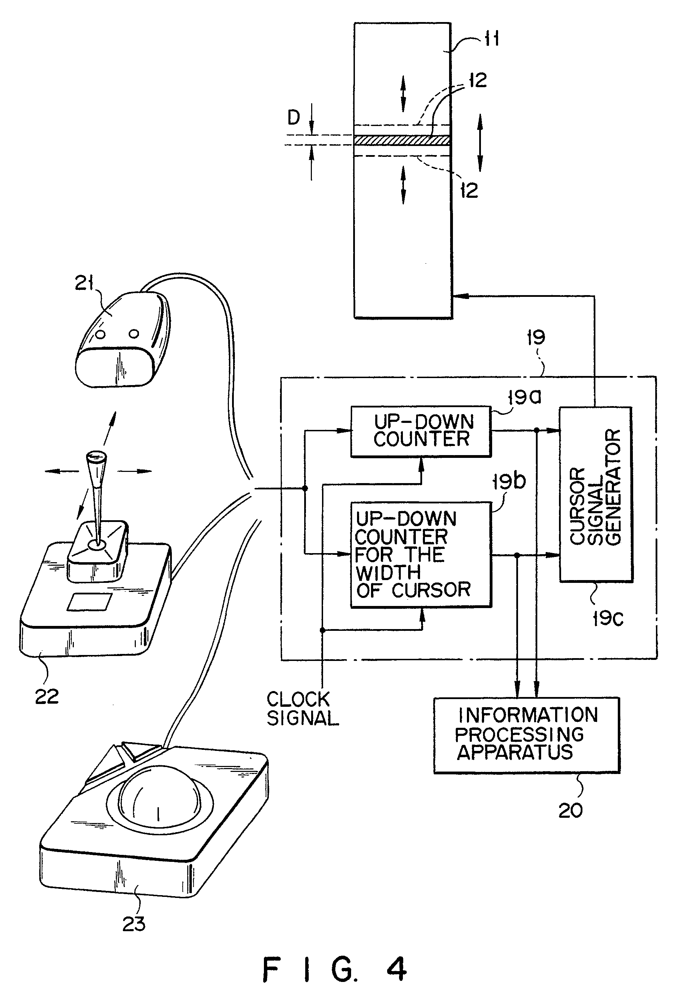

Arrangements of the input apparatus according to the present invention may be a combination of one switch and software in which a designation position is changed as a function of time, a combination of a display screen and at least two volumes, a console of a personal computer or the like, a joystick 22, and a touch sensor, an input apparatus using a track ball 23, a mouse 21, and a voice volume or a sound intensity, and an input apparatus using a mechanical force obtained in synchronism with a hand dynammometer. In this case, an intermediate value of the input data and its allowable width (ambiguity) are input from such an input apparatus. Data having an allowable width is processed, and the ambiguous data can be processed, as indicated in Fig. 4.

According to the present invention, as has been described in detail, there is provided an information input apparatus capable of accurately inputting analog information such as a human feeling.

## Claims

1. A data processing apparatus for processing input data comprising:
   first means (11) for displaying input data as analogue data, said first displaying means including a scale for specifying the data;
   second means (12) for displaying a cursor in said first means, said cursor having a position corresponding to the value of the data, and a width (D) in a direction of the scale corresponding to the range of the data;

means (14, 15) for moving the displayed position of the cursor in accordance with the value to be input;

means (16, 17) for varying the width of the cursor in accordance with the range to be input; and

means (20) for inputting the value and range as data to be processed.

2. A data-base system according to claim 1, characterized by further comprising:

means (18) for confirming said data value and said data value range (D) which are input to said inputting means (20).

3. A data-base system according to claim 1, characterized by further comprising:

a first up-down counter (19a) for receiving and counting signals from said moving position means (14, 15); and

a second up-down counter (19b) for receiving and counting signals from said varying width means (16, 17).

4. A data-base system according to claim 3, characterized by further comprising:

cursor signal generating means (19c) for generating a cursor signal and supplying said cursor signal to said display means (11) by means of receiving signals from said first and second up-down counters (19a, 19b).

5. A data-base system according to claim 1, characterized in that said moving position means (14, 15) and said varying width means (16, 17) include a mouse (21).

6. A data-base system according to claim 1, characterized in that said moving position means (14, 15) and said varying width means (16, 17) include a joystick (22).

7. A data-base system according to claim 1, characterized in that said data moving position means (14, 15) and said varying width means (16, 17) include a track ball (23).

BEST
(255)

HEALTH
CONDITION

D

MEDIOCRE
(128)

WORST
(0)

11

12

12

19

14   15

17   16

13

18

UP-DOWN
COUNTER

19a

UP-DOWN
COUNTER
FOR THE
WIDTH
OF CURSOR

19b

CURSOR
SIGNAL
GENERATOR

19c

CLOCK
SIGNAL

INFORMATION
PROCESSING
APPARATUS

20

F I G. 1

BEST

11

D

WORST

12

MEDIOCRE

F I G. 2

EP 0 443 184 A2

1. SEX                              MALE

2. AGE                             36

3. HEIGHT                          170 cm

4. WEIGHT                          70 Kg

5. DIPLOMACY        INTROVERT  ├────────┤⊂▭⊃├───┤ DIPLOMATIC

6. CHEERFULNESS     MELANCHOLIC├───────────┤⊂▭⊃├──┤ CHEERFUL

7. FLEXIBILITY      STUBBORN   ├────┤⊂──▭──⊃├────┤ FLEXIBLE

8. TALKATIVITY      QUIET      ├──────┤⊂────▭────⊃┤ TALKATIVE

# F I G. 3

F I G. 4